(19) Europäisches Patentamt
European Patent Office
Office européen des brevets

(11) **EP 4 509 530 B1**

(12) **EUROPEAN PATENT SPECIFICATION**

(45) Date of publication and mention
of the grant of the patent:
**26.11.2025 Bulletin 2025/48**

(21) Application number: **24181039.9**

(22) Date of filing: **10.06.2024**

(51) International Patent Classification (IPC):
**C08F 2/00** $^{(2006.01)}$     **C08F 2/01** $^{(2006.01)}$
**C08F 210/02** $^{(2006.01)}$     **C08F 220/06** $^{(2006.01)}$

(52) Cooperative Patent Classification (CPC):
(C-Sets available)
**C08F 220/06; C08F 6/04**                    (Cont.)

(54) **METHOD OF SUPPRESSING PLUGGING IN A PROCESS FOR PRODUCING ETHYLENE-ACRYLIC ACID COPOLYMER**

VERFAHREN ZUR UNTERDRÜCKUNG VON VERSTOPFUNGEN IN EINEM VERFAHREN ZUR HERSTELLUNG EINES ETHYLEN-ACRYLSÄURE-COPOLYMERS

PROCÉDÉ DE SUPPRESSION DE COLMATAGE DANS UN PROCÉDÉ DE PRODUCTION D'UN COPOLYMÈRE D'ÉTHYLÈNE-ACIDE ACRYLIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.08.2023 KR 20230106743**

(43) Date of publication of application:
**19.02.2025 Bulletin 2025/08**

(73) Proprietors:
• **SK Innovation Co., Ltd.**
  **Seoul 03188 (KR)**
• **SK Geo Centric Co., Ltd.**
  **Jongno-gu**
  **Seoul 03161 (KR)**

(72) Inventors:
• **LEE, Ho Seong**
  **34124 Daejeon (KR)**
• **PARK, Ji Hye**
  **34124 Daejeon (KR)**
• **KIM, Won Bin**
  **34124 Daejeon (KR)**
• **KIM, Hong Chan**
  **34124 Daejeon (KR)**
• **LEE, In Su**
  **34124 Daejeon (KR)**
• **JEONG, Wan Ju**
  **34124 Daejeon (KR)**
• **HONG, Seok Bin**
  **34124 Daejeon (KR)**

(74) Representative: **Lorenz Seidler Gossel Part. mbB**
  **Widenmayerstr. 23**
  **80538 München (DE)**

(56) References cited:
  **WO-A1-96/11957          US-A- 4 345 949**
  **US-A1- 2022 098 340**

(52) Cooperative Patent Classification (CPC): (Cont.)

C-Sets
**C08F 6/04, C08L 23/0869;**
**C08F 210/02, C08F 2/008;**
**C08F 210/02, C08F 2/01;**
**C08F 210/02, C08F 2/06;**
C08F 210/02, C08F 220/06

## Description

### TECHNICAL FIELD

The present invention relates to suppressing a plugging phenomenon occurring during a method for producing an ethylene-acrylic acid copolymer.

### BACKGROUND

In a process for producing an ethylene-acrylic acid copolymer, a plugging phenomenon in which an unreacted acrylic acid comonomer is polymerized to be converted into a polyacrylic acid in the rear end of a polymerization reactor in which a polymerization reaction between an ethylene monomer and an acrylic acid comonomer occurs, and the acrylic acid polymer builds up in the reactor and piping occurs. In particular, since an acrylic acid (AA) comonomer forms an acrylic acid polymer such as a polyacrylic acid (PAA) due to high reactivity and self-polymerizability, process interruption often occurs to reduce process efficiency.

In order to solve the problem, conventionally, a polymerization reaction of an acrylic acid comonomer was inhibited using a polymerization inhibitor such as hydroquinone (HQ) and phenothiazine (PTZ). However, under anaerobic conditions, polymerization reaction inhibition efficiency is significantly low, and there is a risk of reducing process stability, for example, introducing a polymerization inhibitor to an ethylene-acrylic acid copolymer as a final product by a circulation process. In addition, the polymerization inhibitor is precipitated in the reactor due to the crystallinity of the polymerization inhibitor described above, so that the polymerization inhibitor rather promotes the plugging phenomenon. US 2022/098340 describes a process for producing an ethylene-based copolymer. A washing step prevents clogging and corrosion, thereby increasing process efficiency.

### SUMMARY

The present invention aims to providing a method for producing an ethylene-acrylic acid copolymer, which may improve process efficiency by suppressing corrosion and plugging in ethylene-acrylic acid copolymer production equipment.

A method for producing an ethylene-acrylic acid copolymer according to the invention includes: (S1) supplying an ethylene monomer and an acrylic acid comonomer and, optionally, a solvent to a polymerization reactor to produce an ethylene-acrylic acid copolymer; (S2) supplying an acrylic acid comonomer-containing a first mixture discharged from a front end and/or a second mixture discharged from a or rear end of the polymerization reactor a cleaning solvent to a cleaning unit; and (S3) dissolving an polyacrylic acid derived from the acrylic acid comonomer contained in the first and/or second mixture in the cleaning solvent, wherein the cleaning solvent includes a polyhydric alcohol-based solvent.

In an exemplary embodiment, the cleaning solvent may have a boiling point of 100 to 400°C.

In an exemplary embodiment, the polyhydric alcohol-based solvent may be a dihydric to tetrahydric alcohol-based solvent.

In an exemplary embodiment, the cleaning solvent includes one or more dihydric alcohols selected from the group consisting of ethylene glycol (EG), propylene glycol (PG), and diethylene glycol (DEG), or a trihydric alcohol including glycerol.

When reference is made herein to the cleaning solvent including a polyhydric alcohol-based solvent, this can mean that the cleaning solvent comprises more than 50wt% of the polyhydric alcohol-based solvent, or more than 80wt% of the polyhydric alcohol-based solvent, or more than 95 wt% of the polyhydric alcohol-based solvent, or consist of the polyhydric alcohol-based solvent.

In an exemplary embodiment, in (S1), a mixing ratio of the ethylene monomer, the acrylic acid comonomer, and a solvent in the first mixture may be 1 to 20 parts by weight of the acrylic acid comonomer and 1 to 20 parts by weight of the solvent, preferably 3 to 10 parts by weight of the acrylic acid comonomer and 3 to 10 parts by weight of the solvent, with respect to 100 parts by weight of the ethylene monomer.

In an exemplary embodiment, step (S1) may include: a first compression stage of compressing the ethylene monomer in a primary compressor; a second compression stage of compressing the pre-compressed ethylene monomer and the acrylic acid comonomer and, optionally, solvent in a hyper compressor to obtain the first mixture; supplying the first mixture to the polymerization reactor and allowing the monomers to undergo polymerization; and feeding the second mixture discharged from the polymerization reactor to a separator to separate the ethylene-acrylic acid copolymer product from the second mixture.

In an exemplary embodiment, step (S1) may further include: feeding a part of the second mixture, which contains ethylene monomer and has been separated from the ethylene-acrylic acid copolymer product in the separator, to a filter unit for filtering off impurities and supplying the filtered ethylene monomer to a front end of the primary compressor or a hyper compressor.

In an exemplary embodiment, the first mixture may be supplied to the cleaning unit through a first supply line which connects a hyper compressor and the cleaning unit, and the second mixture may be transferred to the cleaning unit through a second supply line which connects the polymerization reactor and the cleaning unit.

In an exemplary embodiment, after step (S3), a step (S4) of discharging a cleaning solution comprising the polyacrylic acid dissolved in the cleaning solvent.

In an exemplary embodiment, in step (S2), a mass ratio of the acrylic acid comonomer : the cleaning solvent supplied to the cleaning unit may be 1:0.1 to 1:1, preferably 1:0.3 to 1:1, more preferably 1:0.5 to 1:1.

In an exemplary embodiment, steps (S1) to (S3), or, where applicable, steps (S1) to (S4) may be performed in a continuous process.

In an exemplary embodiment, the first supply line and/or the second supply line may include a heat exchanger.

In an exemplary embodiment, the cleaning solvent may be fed into the first supply line and/or the second supply line upstream of the heat exchanger and passes through the heat exchanger included in the first supply line and/or the second supply line before being supplied to the cleaning unit.

In an exemplary embodiment, the cleaning solvent is supplied the cleaning unit directly and without being fed into the first supply line and/or without being fed into the second supply line and/or without passing through the heat exchanger included in the first supply line and/or the second supply line.

In an exemplary embodiment, a temperature in the cleaning unit may be 0 to 50°C.

Other features and aspects will be apparent from the following detailed description, the drawings, and the claims.

## BRIEF DESCRIPTION OF THE DRAWINGS

FIGS. 1 and 2 are process diagrams of a method for producing an ethylene-acrylic acid copolymer, according to an exemplary embodiment of the invention.

FIGS. 3 to 8 are photographs which observed a plugging suppression effect of a cleaning solvent, during polyacrylic acid cleaning by methods according to Examples 1 to 6.

[Detailed Description of Main Elements]

10: ethylene supply unit
15: acrylic acid comonomer and solvent supply unit
20: primary compressor
25: hyper compressor
30: polymerization reactor
40: high pressure separator
50: filter unit
60: low pressure separator
70: cleaning solvent supply unit
81: first supply line
82: second supply line
85: heat exchanger
90: cleaning unit
A: final product
B: cleaning solution

## DETAILED DESCRIPTION OF EMBODIMENTS

A method according to the invention, which leads to suppressing plugging in a process for producing an ethylene-acrylic acid copolymer, will be described in detail in the following.

When producing an ethylene-acrylic acid copolymer, a plugging phenomenon in which an unreacted acrylic acid comonomer is polymerized to be converted into a polyacrylic acid in the rear end of a polymerization reactor in which a polymerization reaction between an ethylene monomer and an acrylic acid comonomer may occur, and the acrylic acid polymer may build up in the reactor and piping occurs. In particular, since an acrylic acid (AA) comonomer forms an acrylic acid polymer such as a polyacrylic acid (PAA) due to high reactivity and self-polymerizability, process interruption often occurs and reduces process efficiency.

In order to solve these problems, conventionally, a polymerization reaction of an acrylic acid comonomer is inhibited using a polymerization inhibitor such as hydroquinone (HQ) and phenothiazine (PTZ). However, the polymerization inhibitor is precipitated in the reactor due to the crystallinity of the polymerization inhibitor described above, so that the polymerization inhibitor may contribute to the plugging phenomenon rather than mitigating it.

The present invention takes a different approach and uses a cleaning solvent, which includes a polyhydric alcohol-based solvent, to remove an polyacrylic acid at high speeds even when an acrylic acid comonomer is polymerized. This leads to an improved process efficiency by suppressing plugging of a reactor and piping, and to an excellent economic feasibility and productivity.

Hereinafter, an exemplary embodiment of the present invention will be described with reference to the attached drawings.

The method for producing an ethylene-acrylic acid copolymer according to the present invention includes: (S1) supplying an ethylene monomer and an acrylic acid comonomer to a polymerization reactor to produce an ethylene-acrylic acid copolymer; (S2) supplying an acrylic acid comonomer-containing mixture discharged from a front or rear end of the polymerization reactor and a cleaning solvent to a cleaning unit; and (S3) a cleaning step of dissolving an polyacrylic acid derived from the unreacted acrylic acid comonomer contained in the mixture in the cleaning solvent, wherein the cleaning solvent includes a polyhydric alcohol-based solvent.

When the ethylene-acrylic acid copolymer is produced by the method according to the present invention, an polyacrylic acid formed by polymerizing an acrylic acid comonomer is removed rapidly and simply by a cleaning solvent, thereby effectively suppressing a plugging phenomenon occurring in a front or rear end of a polymerization reactor. In addition, since the process proceeds continuously without stopping from a polymerization process to a cleaning process of the ethylene monomer and the acrylic acid comonomer, process efficiency may be improved.

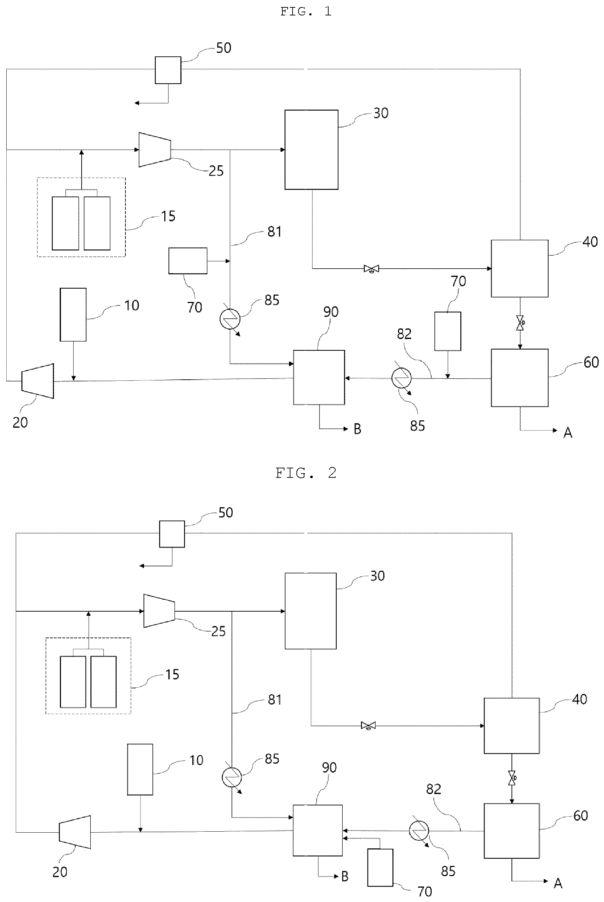

FIGS. 1 and 2 are schematic diagrams showing a production device of an ethylene-acrylic acid copolymer according to an exemplary embodiment. Referring to FIGS. 1 and 2, in (S1), the ethylene monomer may be supplied to an ethylene supply unit 10 and first compressed through a primary compressor 20. The ethylene monomer which is first compressed and the acrylic acid comonomer and the solvent which are supplied from the acrylic acid comonomer and solvent supply unit 15 are supplied to a hyper compressor 25 and second compressed, and then a compressed material including the compressed ethylene monomer, the acrylic acid comonomer, and the solvent may be supplied to a polymerization reactor 30. Herein, an acrylic acid comonomer-containing first mixture leaking during compression in the hyper compressor is transferred to the cleaning unit, thereby significantly reducing a risk of plugging occurring in the front end of the polymerization reactor.

The ethylene-acrylic acid copolymer which is the final product (A) is obtained by a polymerization reaction in the polymerization reactor 30, and a second mixture containing the ethylene-acrylic acid copolymer may be discharged from the polymerization reactor. The second mixture discharged from the polymerization reactor 30 passes through a high pressure separator 40 and a low pressure separator 60 to separate the ethylene-acrylic acid copolymer from the second mixture, thereby obtaining the final product (A).

The second mixture from which the ethylene-acrylic acid copolymer has been separated may be supplied to a cleaning unit 90. The second mixture may contain an unreacted ethylene monomer, an polyacrylic acid, a solvent, other additives, an initiator, and the like.

In an exemplary embodiment, the solvent may be any medium in which a copolymerization reaction of an ethylene monomer and an acrylic acid comonomer may occur, and may be, for example, a low-boiling point polar solvent. Illustratively, the solvent may include any one or two or more selected from the group consisting of methyl alcohol, ethyl alcohol, isopropyl alcohol, methyl ethyl ketone, tetrahydrofuran, acetone, ethyl acetate, propyl acetate, butyl acetate, 2-methoxyethanol, and 2-ethoxyethanol.

In an exemplary embodiment, in (S1), a mixing ratio of the ethylene monomer, the acrylic acid comonomer, and the solvent may be 1 to 20 parts by weight of the acrylic acid comonomer and 1 to 20 parts by weight of the solvent, or 3 to 10 parts by weight of the acrylic acid comonomer and 3 to 10 parts by weight of the solvent, with respect to 100 parts by weight of the ethylene monomer.

In (S1), since the polymerization may be polymerization by an initiator, for example, free radical polymerization, the compressed material supplied to the polymerization reactor 30 may further include an initiator, specifically a radical initiator, and each monomer reacts under the radical initiator, thereby performing polymerization. As an example, the polymerization may be performed by an initiator mixed solution including a radical initiator and a diluting solvent.

A content of the initiator used may be an amount to initiate a radical polymerization reaction, and for example, may be 0.001 parts to 1 parts by weight based on 100 parts by weight of a total monomer. In addition, a content of the diluting solvent used may be properly adjusted, and for example, 5 parts to 1,000 parts by weight of the diluting solvent may be used with respect to 1 part by weight of the initiator.

As an example, the type of radical initiator may be any one to allow radical polymerization between an ethylene monomer and an acrylic acid comonomer to be performed, and a peroxy-based organic peroxide including any one or two or more selected from peroxycarbonate, peroxydicarbonate, peroxyester, and peroxyketal may be exemplified.

The diluting solvent may be any initiator diluting solvent known in the art, and for example, when a paraffin-based solvent including Isopar-H is used as the diluting solvent, a uniform copolymer may be obtained and quality decline such as decreased molecular weight may be prevented.

In an example of the present invention, the compressed material supplied to the polymerization reactor 30 may further include a chain transfer agent. As an example, the chain transfer agent may be aliphatic and olefin-based hydrocarbons, for example, saturated hydrocarbons having 6 or more carbon atoms, for example, compounds such as hexane, cyclohexane, and octane; ketone-based compounds such as acetone, diethylketone, and diamylketone; aldehyde-based compounds such as formaldehyde and acetaldehyde; and alcohol-based compounds such as methanol, ethanol, propanol, and butanol; and the like. When the chain transfer agent is used, a content of the chain transfer agent used may, for example, be 0.1 parts to 20 parts by weight with respect to 100 parts by weight of the total monomer.

As described above, (S1) may be performed under high temperature and high pressure conditions through pressure and temperature control. and as an example, a polymerization temperature and a polymerization pressure may be performed under a temperature condition of 100°C to 400°C, 150°C to 350°C, or 200°C to 300°C, and a pressure condition of 1000 bar to 5000 bar, 1100 bar to 4000 bar, or 1200 bar to 3000 bar.

The polymerization reactor 30 may be any conventionally known polymerization reactor, and for example, may be various reactors, for example, a batch reactor such as autoclave, a continuous stirred tank reactor (CSTR), a tubular reactor, and the like.

In addition, in an example, a primary compressor 20, a hyper compressor 25, a high pressure separator (HPS) 40, and a low pressure separator (LPS) 60 may be any conventionally known ethylene-based polymer production devices.

As an example, in the high pressure separator 40, a part of the second mixture may move to a filter unit 50, pass through a filtering process, and be supplied to a front end of the primary compressor 20 or a hyper compressor 25. A part of the second mixture may contain an unreacted ethylene monomer. The unreacted ethylene monomer may be recovered to the polymerization reactor 30 and reused in the polymerization reaction, thereby producing the ethylene-acrylic acid copolymer with high efficiency.

(S2) is supplying an acrylic acid comonomer-containing mixture including a first mixture discharged from the hyper compressor 25 in the front end of the polymerization reactor 30 and a second mixture discharged from the rear end of the polymerization reactor 30 to a cleaning unit 90. The first mixture may be supplied through a first supply line 81 which connects a hyper compressor 25 and a cleaning unit 90, and the second mixture may be supplied to the cleaning unit 90 which passes through the high pressure separator 40 and the low pressure separator 60 through a second supply line 82 which connects the polymerization reactor 30 and the cleaning unit 90.

In an exemplary embodiment, the first supply line 81 and the second supply line 82 may include a heat exchanger 85. A temperature ($T_1$) of the mixture containing the unreacted acrylic acid comonomer before passing through the heat exchanger 85 and a temperature ($T_2$) of the mixture containing an unreacted acrylic acid comonomer which has passed through the heat exchanger 85 may satisfy the following Equation 1:

$$[\text{Equation 1}]$$

$$3 < T_2/T_1 < 20$$

wherein $T_2/T_1$ may be 3 to 20, 6 to 19, or 10 to 18. Within the temperature range, since the mixture containing an unreacted acrylic acid comonomer in a gaseous state is cooled and condensed through the heat exchanger 85, and supplied to the cleaning unit 90, cleaning efficiency is excellent, and a cleaning solution (B) including an polyacrylic acid which is dissolved by the cleaning solvent in (S3) described later may be easily removed.

In (S2), the cleaning solvent may be supplied to the first mixture and the second mixture simultaneously, and after the mixture is supplied, the cleaning solvent may be sequentially supplied. In addition, as shown in FIG. 2, the cleaning solvent may be directly supplied to a cleaning unit 90 by a cleaning solvent feeder 70, and more advantageously, as shown in FIG. 1, the cleaning solvent feeder 70 is placed in the first supply line 81 and the second supply line 82, and as the cleaning solvent passes through the heat exchanger 85 and is supplied to the cleaning unit 90, the polyacrylic acid accumulated in the heat exchanger 85 and even piping of the first supply line 81 and the second supply line 82 may be dissolved to prevent even piping blockage.

In an exemplary embodiment, in (S2), a mass ratio of the acrylic acid comonomer : the cleaning solvent supplied to the cleaning unit 90 may be 1:0.1 to 1:1, 1:0.3 to 1:1, or 1:0.5 to 1:1. In the mass ratio, the cleaning solvent may effectively dissolve the polyacrylic acid derived from the acrylic acid comonomer. When the mass ratio is out of the range, the dissolution effect of the polyacrylic acid may be decreased. When the content of the cleaning solvent is lower than the range, the dissolution efficiency of the polyacrylic acid is lowered, and when the cleaning solvent is supplied above the range, the dissolution effect of the polyacrylic acid is decreased and also the amount of the cleaning solvent used is excessively increased to decrease economic feasibility.

In addition, in an example, a pressure of the cleaning unit 90 may be 1 bar to 20 bar, 5 bar to 15 bar, or 7 bar to 12 bar.

The mixture containing the acrylic acid comonomer and the cleaning solvent are supplied to the cleaning unit 90, the cleaning solvent may dissolve the acrylic acid comonomer and the polyacrylic acid. In conventional methods for producing an ethylene-acrylic acid copolymer, the unreacted acrylic acid comonomer may be rapidly polymerized with high reactivity and self-polymerization to form a large amount of the polyacrylic acid. The polyacrylic acid accumulates in piping, the reactor, and the like to contaminate process equipment and cause a decrease in process efficiency.

Thus, when the cleaning solvent of the present invention is used, though the acrylic acid comonomer is polymerized and the produced polyacrylic acid is attached to piping and the reactor, the acrylic acid comonomer and the polyacrylic acid are rapidly dissolved in the cleaning solvent and removed, thereby effectively suppressing a plugging phenomenon.

In an exemplary embodiment, the boiling point of the cleaning solvent may be 100°C to 400°C, 100°C to 350°C, or 150°C to 300°C. Using the cleaning solvent having the boiling point in the range, an excellent cleaning effect may be provided without affecting other processes including the polymerization reaction. When the cleaning solvent having the boiling point below the range is used, the cleaning solvent vaporizes inside the cleaning unit 90 to decrease the cleaning effect, and also the cleaning solvent in a gaseous state is introduced into processes other than (S2) and may adversely affect the production of the ethylene-acrylic acid copolymer.

In an example, the cleaning solvent may have a density of 0.5 g/cm$^3$ to 2 g/cm$^3$, 0.6 g/cm$^3$ to 1.8 g/cm$^3$, or 0.8 g/cm$^3$ to 1.5 g/cm$^3$. In the density range, the polyacrylic acid may be dissolved at a rapid rate, and when it has a higher density than the range, flowability may be decreased to delay a time for the polyacrylic acid to dissolve.

In an exemplary embodiment, the cleaning solvent may include a polyhydric alcohol-based solvent. The polyhydric alcohol-based solvent may be an alcohol-based solvent including dihydric to tetrahydric, or dihydric and trihydric alcohol groups.

The cleaning solvent may include one or more dihydric alcohols selected from the group consisting of ethylene glycol (EG), propylene glycol (PG), and diethylene glycol (DEG), or a trihydric alcohol including glycerol.

In an example, a temperature of the cleaning unit may be 0°C to 50°C, 5°C to 45°C, or 10°C to 40°C, and a pressure of the cleaning unit may be 1 bar to 20 bar, 3 bar to 17 bar, or 5 bar to 15 bar.

In an exemplary embodiment, after (S3), (S4) discharging the cleaning solution (B) in which the unreacted acrylic acid comonomer and the polyacrylic acid are dissolved may be further included to suppress plugging. The process is performed continuously without stopping the process from (S1) to (S4), thereby providing a method for producing an ethylene-acrylic acid copolymer which has improved process efficiency and excellent economic feasibility and productivity.

In an exemplary embodiment, the cleaning unit 90 may be a vapor-liquid separator. Using the vapor-liquid separator as the cleaning unit 90, in (S4), the cleaning solution (B) in a liquid state in which the acrylic acid comonomer and the polyacrylic acid are dissolved is discharged to the outside, and simultaneously, a gaseous unreacted residue is resupplied to the front end of the polymerization reactor 30 or the front end of the primary compressor 20, thereby further improving the efficiency of the production method.

Hereinafter, further details of the present invention will be described in more detail by a number of working examples and comparative examples.

(Example 1)

An acrylic acid-containing mixture discharged during a method for producing an ethylene-acrylic acid copolymer and ethylene glycol (EG) to which 5 wt% of an polyacrylic acid was added were supplied to a cleaning unit, and then an polyacrylic acid was cleaned under room temperature and normal pressure conditions. At this time, a mass ratio of the acrylic acid, an initiator diluting solvent (Exxon Mobil, Isopar-H), and a cleaning solvent which were supplied to the cleaning unit was 1:1:1.

(Example 2)

An polyacrylic acid was cleaned in the same manner as in Example 1, except that propylene glycol (PG) was used instead of ethylene glycol (EG) as the cleaning solvent.

(Example 3)

An polyacrylic acid was cleaned in the same manner as in Example 1, except that diethylene glycol (DEG) was used instead of ethylene glycol (EG) as the cleaning solvent.

(Example 4)

An polyacrylic acid was cleaned in the same manner as in Example 1, except that glycerol was used instead of ethylene glycol (EG) as the cleaning solvent.

(Example 5)

An acrylic acid-containing mixture discharged during a method for producing an ethylene-acrylic acid copolymer and ethylene glycol (EG) were supplied to a cleaning unit, and then an polyacrylic acid was cleaned under room temperature and normal pressure conditions. At this time, a mass ratio of the acrylic acid, an initiator diluting solvent (Exxon Mobil, Isopar-H), and a cleaning solvent which were supplied to the cleaning unit was 2:1:1.

(Example 6)

An polyacrylic acid was cleaned in the same manner as in Example 5, except that propylene glycol (PG) was used instead of ethylene glycol (EG) as the cleaning solvent.

(Example 7)

An polyacrylic acid was cleaned in the same manner as in Example 1, except that a mass ratio of the acrylic acid, the initiator diluting solvent (Exxon Mobil, Isopar-H), and the cleaning solvent which were supplied to the cleaning unit was 1:1:0.1.

(Comparative Example 1)

An polyacrylic acid was cleaned in the same manner as in Example 1, except that ethanol was used instead of ethylene glycol (EG) as the cleaning solvent.

(Comparative Example 2)

An polyacrylic acid was cleaned in the same manner as in Example 1, except that methanol was used instead of ethylene glycol (EG) as the cleaning solvent.

(Comparative Example 3)

An polyacrylic acid was cleaned in the same manner as in Example 1, except that methyl ethyl ketone (MEK) was used instead of ethylene glycol (EG) as the cleaning solvent.

(Comparative Example 4)

An polyacrylic acid was cleaned in the same manner as in Example 1, except that the cleaning solvent was not added.

(Comparative Example 5)

An polyacrylic acid was cleaned in the same manner as in Example 1, except that a mass ratio of the acrylic acid, the initiator diluting solvent (Exxon Mobil, Isopar-H), and the cleaning solvent which were supplied to the cleaning unit was 1:1:1.5.

When the polyacrylic acid was cleaned by the methods according to Examples 1 to 7 and Comparative Examples 1 to 5, it was evaluated whether the polyacrylic acid was dissolved. In the following Table 1, during cleaning of the polyacrylic acid, when no color change of the cleaning solution and polyacrylic acid precipitates were not observed with the naked eye, it was indicated as ⊚, when the polyacrylic acid precipitate was not observed with the naked eye, but when the cleaning solution becomes opaque, it was indicated as ∘, and when the polyacrylic acid precipitates were observed, it was indicated as X.

[Table 1]

| | Cleaning solvent | Mass ratio of cleaning solvent : acrylic acid : Isopar-H | Whether polyacrylic acid was dissolved |
|---|---|---|---|
| Example 1 | Ethylene glycol | 1:1:1 | ◎ |
| Example 2 | Propylene glycol | 1:1:1 | ◎ |
| Example 3 | Diethylene glycol | 1:1:1 | ◎ |
| Example 4 | Glycerol | 1:1:1 | ◎ |
| Example 5 | Ethylene glycol | 1:2:0 | ◎ |
| Example 6 | Propylene glycol | 1:2:0 | ◎ |
| Example 7 | Ethylene glycol | 1:1:1 | ◎ |
| Comparative Example 1 | Ethanol | 1:1:1 | ◎ |
| Comparative Example 2 | Methanol | 1:1:1 | ◎ |
| Comparative Example 3 | Methyl ethyl ketone | 1:1:1 | × |
| Comparative Example 4 | None | 0:1:1 | × |
| Comparative Example 5 | Ethylene glycol | 1.5:1:1 | ○ |

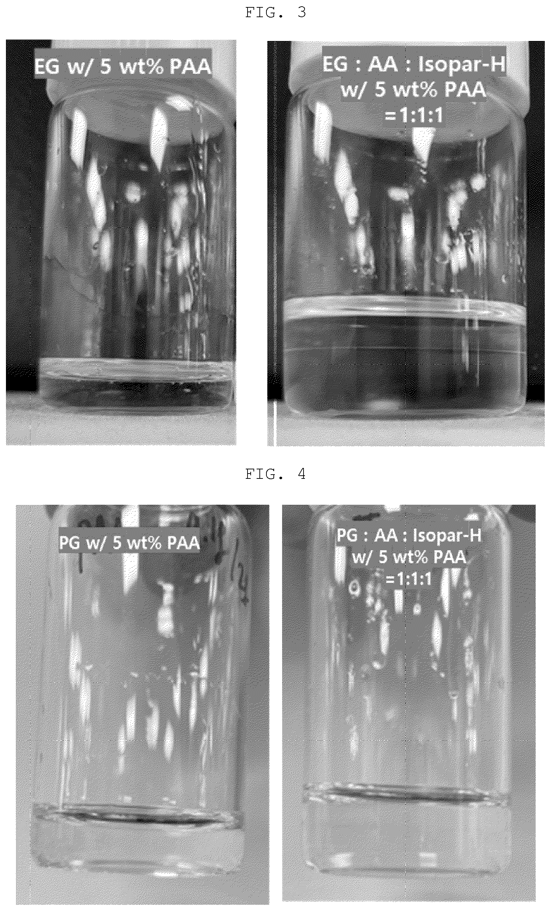

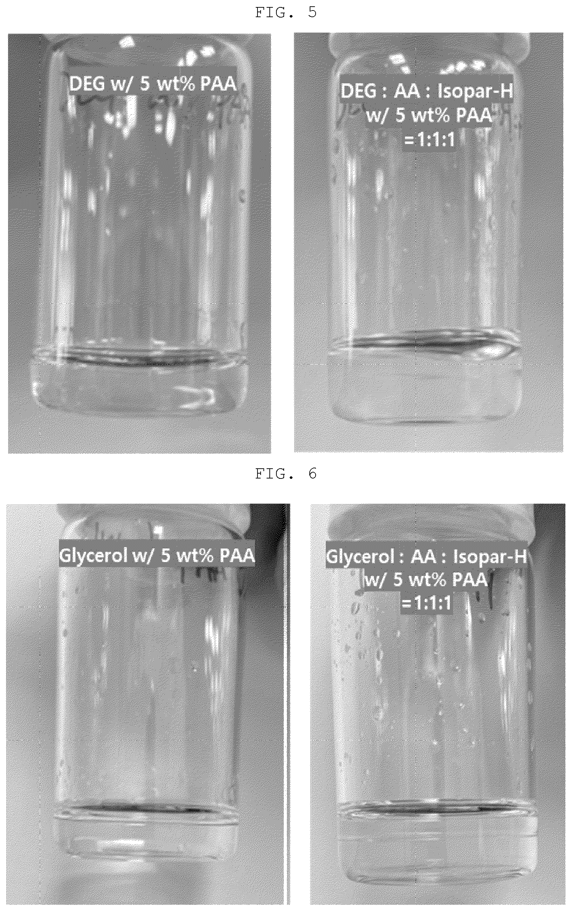

As shown in FIGS. 3 to 8 and Table 1, it was confirmed in Examples 1 to 7 that the acrylic acid and the polyacrylic acid were rapidly dissolved in the cleaning solvent.

Specifically, FIGS. 3 to 6 are photographs in which when the polyacrylic acid was cleaned by the methods of Examples 1 to 4, respectively, the cleaning solutions in which the acrylic acid, Isopar-H, and the cleaning solvent were mixed were observed, and show an evaluation of the dissolution effect of the cleaning solvent for the polyacrylic acid.

As shown in FIGS. 3 to 6, in Examples 1 to 4 in which ethylene glycol, propylene glycol, diethylene glycol, and glycerol were used as the cleaning solvent, respectively, though Isopar-H as a diluting solvent was present, considering that phase separation or precipitates of the polyacrylic acid was not produced in the cleaning solution, it was confirmed that the cleaning solvent was able to effectively suppress plugging in the process reactor and piping regardless of whether the diluting solvent was present.

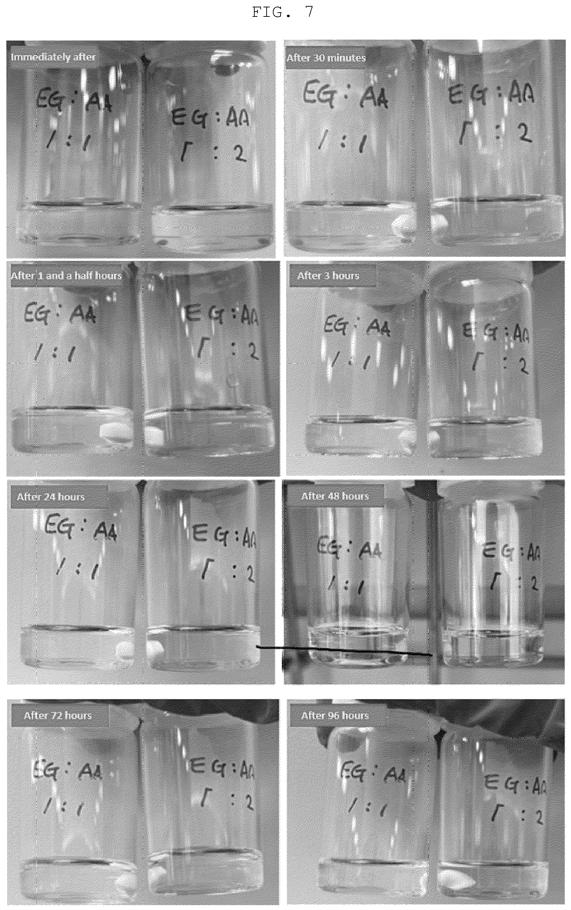

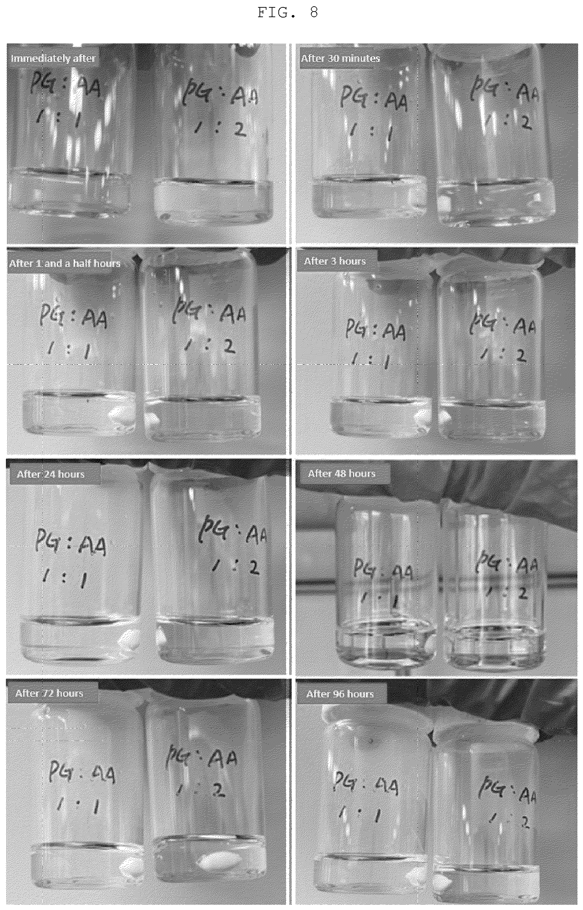

FIG. 7 is a photograph in which ethylene glycol as the cleaning solution and the acrylic acid comonomer were mixed by the method of Example 5, and then it was observed for 96 hours whether the polyacrylic acid was dissolved, and FIG. 8 is a photograph in which propylene glycol as the cleaning solution and the acrylic acid comonomer were mixed by the method of Example 6, and then it was observed for 96 hours whether the polyacrylic acid was dissolved.

In Examples 5 and 6, a cleaning effect when a cleaning solvent to which the polyacrylic acid was not optionally added and an acrylic acid and Isopar-H-containing mixture discharged from the polymerization reactor were mixed was confirmed, and as shown in FIGS. 7 and 8, the acrylic acid dissolved in the cleaning solution was converted into a polyacrylic acid or the polyacrylic acid was not precipitated even after 96 hours, and thus, long-term stability was confirmed to be excellent.

In Example 7, since the mass ratio of the acrylic acid and the cleaning solvent was 1:0.1, the content of the cleaning solvent was significantly decreased as compared with Example 1, but the dissolution effect of the polyacrylic acid was excellent. Thus, the amount of the cleaning solvent used was saved, which is favorable from an economic perspective.

Thus, since the polyacrylic acid produced during the method for producing ethylene-acrylic acid was rapidly removed, process efficiency was improved.

However, in Comparative Examples 1 to 3 in which monohydric alcohol and a ketone-based solvent having a low boiling point of 80°C or lower were used as the cleaning solvent, as shown in Table 1, the ketone-based solvent of Comparative Example 3 did not dissolve the polyacrylic acid. In Comparative Examples 1 and 2 in which monohydric alcohol was used as the cleaning solvent, a solubility of the polyacrylic acid was high, but since the volatility of the cleaning solvent was high, the cleaning solvent vaporized during production of the ethylene-acrylic acid copolymer is introduced to a circulation process and other processes were adversely affected. Therefore, it was confirmed to be inappropriate for use to suppress plugging in the production of the ethylene-acrylic acid copolymer.

In Comparative Example 4 in which the cleaning solvent was not included also, the polyacrylic acid was formed and precipitated. In Comparative Example 5 in which the mass ratio of the acrylic acid and the cleaning solvent was 1:1.5, polyacrylic acid precipitates which were visible to the naked eye were not observed, but transparency of the cleaning solution was decreased over time and the solution became somewhat opaque. Therefore, as the content of the cleaning solvent as compared with the acrylic acid was higher, the cleaning effect was decreased and the amount of the cleaning solvent used was increased, which was not good from an economic perspective.

Therefore, when the ethylene-acrylic acid copolymer was produced by the method of the present invention, the polyacrylic acid derived from the unreacted acrylic acid comonomer was rapidly dissolved in the cleaning solvent, thereby suppressing plugging by the polyacrylic acid. At the same time, since the cleaning solvent of the present invention did not adversely affect other processes including a polymerization step of the ethylene monomer and the acrylic acid comonomer, the productivity of the ethylene-acrylic acid copolymer was also maintained to be high. Thus, since the efficiency of the production of the ethylene-acrylic acid copolymer was improved, and failure and corrosion of process equipment such as a reactor and piping, caused by plugging was able to be prevented, costs of maintaining process equipment was able to be reduced, and thus, the method of the present invention was favorable.

The method for producing an ethylene-acrylic acid copolymer according to the present invention may prevent corrosion of a reactor and piping.

In addition, since the production is not be stopped by plugging, a method for producing an ethylene-acrylic acid copolymer, of which the process efficiency is improved and economic feasibility and productivity are excellent, may be provided.

## Claims

1. A method for producing an ethylene-acrylic acid copolymer, the method comprising:

   (S1) supplying an ethylene monomer and an acrylic acid comonomer and, optionally, a solvent to a polymerization reactor (30) to produce an ethylene-acrylic acid copolymer;
   (S2) supplying an acrylic acid comonomer-containing first mixture discharged from a front end and/or an acrylic acid comonomer-containing second mixture discharged from a rear end of the polymerization reactor (30), and a cleaning solvent, to a cleaning unit (90); and
   (S3) dissolving an polyacrylic acid derived from the acrylic acid comonomer contained in the first and/or second mixture in the cleaning solvent,
   wherein the cleaning solvent includes a polyhydric alcohol-based solvent.

2. The method of claim 1, wherein the cleaning solvent has a boiling point of 100°C to 400°C.

3. The method of any preceding claim, wherein the polyhydric alcohol-based solvent is a dihydric to tetrahydric alcohol-based solvent.

4. The method of claim 3, wherein the cleaning solvent includes one or more dihydric alcohols selected from the group consisting of ethylene glycol (EG), propylene glycol (PG), and diethylene glycol (DEG), or a trihydric alcohol including glycerol.

5. The method of any preceding claim, wherein, in (S1), a mixing ratio of the ethylene monomer, the acrylic acid comonomer, and a solvent in the first mixture is 1 to 20 parts by weight of the acrylic acid comonomer and 1 to 20 parts by weight of the solvent, preferably 3 to 10 parts by weight of the acrylic acid comonomer and 3 to 10 parts by weight of the solvent, with respect to 100 parts by weight of the ethylene monomer.

6. The method of any preceding claim, wherein (S1) includes:

   a first compression stage of compressing the ethylene monomer in a primary compressor (20);
   a second compression stage of compressing the pre-compressed ethylene monomer and the acrylic acid comonomer and, optionally, solvent in a hyper compressor (25) to obtain the first mixture;
   supplying the first mixture to the polymerization reactor (30) and allowing the monomers to undergo polymerization; and
   feeding the second mixture discharged from the polymerization reactor (30) to a separator (40) to separate the ethylene-acrylic acid copolymer product from the second mixture.

7. The method of claim 6, wherein (S1) further includes:
   feeding a part of the second mixture, which contains ethylene monomer and has been separated from the ethylene-acrylic acid copolymer product in the separator (40), to a filter unit (50) for filtering off impurities and supplying the filtered ethylene monomer to a front end of the primary (20) compressor or the hyper compressor (25).

8. The method of claim 6 or 7,
   wherein the first mixture is supplied to the cleaning unit (90) through a first supply line (81), which connects the hyper compressor (25) and the cleaning unit (90), and
   the second mixture is transferred to the cleaning unit (90) through a second supply line (82), which connects the polymerization reactor (30) and the cleaning unit (90).

9. The method of any preceding claim, further comprising: after step (S3), a step (S4) of discharging a cleaning solution comprising the polyacrylic acid dissolved in the cleaning solvent.

10. The method of any preceding claim, wherein in step (S2), a mass ratio of the acrylic acid comonomer : the cleaning solvent supplied to the cleaning unit (90) is 1:0.1 to 1:1, preferably 1:0.3 to 1:1, more preferably 1:0.5 to 1:1.

11. The method of any preceding claim, wherein steps (S1) to (S3) or, if applicable, steps (S1) to (S4) are performed in a continuous process.

12. The method of any one of claims 8 to 11, wherein the first supply line (81) and/or the second supply line (82) include a heat exchanger (85).

13. The method of claim 12, wherein the cleaning solvent is fed into the first supply line (81) and/or the second supply line (85) upstream of the heat exchanger (85) and passes through the heat exchanger (85) included in the first supply line (81) and/or the second supply line (85) before being supplied to the cleaning unit (90).

14. The method of any one of claims 8 to 11, wherein the cleaning solvent is supplied the cleaning unit (90) directly and without being fed into the first supply line (81) and/or without being fed into the second supply line (85) and/or without passing through the heat exchanger (85) included in the first supply line (81) and/or the second supply line (85).

15. The method of any preceding claim, wherein a temperature in the cleaning unit is 0°C to 50°C.


**Patentansprüche**

1. Verfahren zur Herstellung eines Ethylen-Acrylsäure-Copolymers, wobei das Verfahren Folgendes umfasst:

   (S1) Zuführen eines Ethylenmonomers und eines Acrylsäure-Comonomers und optional eines Lösungsmittels in einen Polymerisationsreaktor (30), um ein Ethylen-Acrylsäure-Copolymer herzustellen;
   (S2) Zuführen eines Acrylsäure-Comonomer-haltigen ersten Gemischs, das von einem vorderen Ende abgegeben wird, und/oder eines Acrylsäure-Comonomer-haltigen zweiten Gemischs, das von einem hinteren Ende des Polymerisationsreaktors (30) abgegeben wird, und eines Reinigungslösungsmittels zu einer Reinigungseinheit (90); und
   (S3) Auflösen einer Polyacrylsäure, die von dem Acrylsäure-Comonomer abgeleitet ist, das in dem ersten und/oder zweiten Gemisch in dem Reinigungslösungsmittel enthalten ist,
   wobei das Reinigungslösungsmittel ein Lösungsmittel auf Basis eines mehrwertigen Alkohols beinhaltet.

2. Verfahren nach Anspruch 1, wobei das Reinigungslösungsmittel einen Siedepunkt von 100 °C bis 400 °C aufweist.

3. Verfahren nach einem der vorhergehenden Ansprüche, wobei das Lösungsmittel auf Basis eines mehrwertigen Alkohols ein Lösungsmittel auf Basis eines zweiwertigen bis vierwertigen Alkohols ist.

4. Verfahren nach Anspruch 3, wobei das Reinigungslösungsmittel einen oder mehrere zweiwertige Alkohole beinhaltet, ausgewählt aus der Gruppe bestehend aus Ethylenglykol (EG), Propylenglykol (PG) und Diethylenglykol (DEG), oder einem dreiwertigen Alkohol, der Glycerin beinhaltet.

5. Verfahren nach einem der vorhergehenden Ansprüche, wobei in (S1) ein Mischverhältnis des Ethylenmonomers, des Acrylsäure-Comonomers und eines Lösungsmittels in dem ersten Gemisch 1 bis 20 Gewichtsteile des Acrylsäure-Comonomers und 1 bis 20 Gewichtsteile des Lösungsmittels, vorzugsweise 3 bis 10 Gewichtsteile des Acrylsäure-Comonomers und 3 bis 10 Gewichtsteile des Lösungsmittels, bezogen auf 100 Gewichtsteile des Ethylenmonomers, beträgt.

6. Verfahren nach einem der vorhergehenden Ansprüche, wobei (S1) Folgendes beinhaltet:

eine erste Verdichtungsstufe zum Verdichten des Ethylenmonomers in einem Primärkompressor (20);
eine zweite Verdichtungsstufe zum Verdichten des vorkomprimierten Ethylenmonomers und des Acrylsäure-Comonomers und optional Lösungsmittel in einem Hyperkompressor (25), um das erste Gemisch zu erhalten;
Zuführen des ersten Gemischs in den Polymerisationsreaktor (30) und Polymerisieren lassen der Monomere; und
Speisen des zweiten Gemischs, das aus dem Polymerisationsreaktor (30) abgegeben wird, an einen Separator (40), um das Ethylen-Acrylsäure-Copolymerprodukt von dem zweiten Gemisch zu trennen.

7. Verfahren nach Anspruch 6, wobei (S1) ferner Folgendes beinhaltet:
Speisen eines Teils des zweiten Gemischs, das Ethylenmonomer enthält und in dem Separator (40) von dem Ethylen-Acrylsäure-Copolymerprodukt getrennt wurde, an eine Filtereinheit (S0) zum Abfiltern von Verunreinigungen und Zuführen des gefilterten Ethylenmonomers zu einem vorderen Ende des Primärkompressors (20) oder des Hyperkompressors (25).

8. Verfahren nach Anspruch 6 oder 7,
wobei das erste Gemisch der Reinigungseinheit (90) durch eine erste Zufuhrleitung (81) zugeführt wird, die den Hyperkompressor (25) und die Reinigungseinheit (90) verbindet, und das zweite Gemisch der Reinigungseinheit (90) durch eine zweite Zufuhrleitung (82) übertragen wird, die den Polymerisationsreaktor (30) und die Reinigungseinheit (90) verbindet.

9. Verfahren nach einem der vorhergehenden Ansprüche, ferner umfassend:
nach dem Schritt (S3) einen Schritt (S4) des Abgebens einer Reinigungslösung, umfassend die Polyacrylsäure, die in dem Reinigungslösungsmittel aufgelöst wird.

10. Verfahren nach einem der vorhergehenden Ansprüche, wobei in Schritt (S2) ein Massenverhältnis des Acrylsäure-Comonomers: zu dem Reinigungslösungsmittel, das der Reinigungseinheit (90) zugeführt wird, 1:0,1 bis 1:1, vorzugsweise 1:0,3 bis 1:1, noch bevorzugter 1:0,5 bis 1:1 beträgt.

11. Verfahren nach einem der vorhergehenden Ansprüche, wobei die Schritte (S1) bis (S3) oder, falls zutreffend, die Schritte (S1) bis (S4) in einem kontinuierlichen Prozess durchgeführt werden.

12. Verfahren nach einem der Ansprüche 8 bis 11, wobei die erste Zufuhrleitung (81) und/oder die zweite Zufuhrleitung (82) einen Wärmetauscher (85) beinhalten.

13. Verfahren nach Anspruch 12, wobei das Reinigungslösungsmittel in die erste Zufuhrleitung (81) und/oder die zweite Zufuhrleitung (85) stromaufwärts des Wärmetauschers (85) eingespeist wird und den Wärmetauscher (85) durchläuft, der in der ersten Zufuhrleitung (81) und/oder der zweiten Zufuhrleitung (85) beinhaltet ist, bevor es der Reinigungseinheit (90) zugeführt wird.

14. Verfahren nach einem der Ansprüche 8 bis 11, wobei das Reinigungslösungsmittel der Reinigungseinheit (90) direkt und ohne Einspeisen in die erste Zufuhrleitung (81) und/oder ohne Einspeisen in die zweite Zufuhrleitung (85) und/oder ohne Durchlaufen des Wärmetauschers (85), der in der ersten Zufuhrleitung (81) und/oder der zweiten Zufuhrleitung (85) beinhaltet ist, zugeführt wird.

15. Verfahren nach einem der vorhergehenden Ansprüche, wobei die Temperatur in der Reinigungseinheit 0 °C bis 50 °C beträgt.

## Revendications

1. Procédé de production d'un copolymère d'éthylène-acide acrylique, le procédé comprenant :

(S1) la fourniture d'un monomère d'éthylène et d'un comonomère d'acide acrylique et, optionnellement, d'un solvant à un réacteur de polymérisation (30) pour produire un copolymère d'éthylène-acide acrylique ;
(S2) la fourniture d'un premier mélange contenant un comonomère d'acide acrylique déchargé d'une extrémité avant et/ou d'un second mélange contenant un comonomère d'acide acrylique déchargé d'une extrémité arrière du réacteur de polymérisation (30), et d'un solvant de nettoyage, à une unité de nettoyage (90) ; et
(S3) la dissolution d'un acide polyacrylique dérivé du comonomère d'acide acrylique contenu dans le premier et/ou le second mélange dans le solvant de nettoyage,
dans lequel le solvant de nettoyage inclut un solvant à base d'alcool polyhydrique.

2.  Procédé selon la revendication 1, dans lequel le solvant de nettoyage présente un point d'ébullition de 100°C à 400°C.

3.  Procédé selon une quelconque revendication précédente, dans lequel le solvant à base d'alcool polyhydrique est un solvant à base d'alcool dihydrique à tétrahydrique.

4.  Procédé selon la revendication 3, dans lequel le solvant de nettoyage inclut un ou plusieurs alcools dihydriques choisis dans le groupe constitué d'éthylène glycol (EG), de propylène glycol (PG) et de diéthylène glycol (DEG), ou d'un alcool trihydrique incluant du glycérol.

5.  Procédé selon une quelconque revendication précédente, dans lequel, dans (S1), un rapport de mélange du monomère d'éthylène, du monomère d'acide acrylique et d'un solvant dans le premier mélange est de 1 à 20 parties en poids du comonomère d'acide acrylique et de 1 à 20 parties en poids du solvant, de préférence de 3 à 10 parties en poids du comonomère d'acide acrylique et de 3 à 10 parties en poids du solvant, par rapport à 100 parties en poids du monomère d'éthylène.

6.  Procédé selon une quelconque revendication précédente, dans lequel (S1) inclut :

    une première étape de compression du monomère d'éthylène dans un compresseur primaire (20) ;
    une seconde étape de compression du monomère d'éthylène pré-comprimé et du comonomère d'acide acrylique et, optionnellement, d'un solvant dans un hyper-compresseur (25) pour obtenir le premier mélange ;
    la fourniture du premier mélange au réacteur de polymérisation (30) et la polymérisation des monomères ; et
    l'alimentation d'un séparateur (40) en second mélange déchargé du réacteur de polymérisation (30) pour séparer le produit de copolymère d'éthylène-acide acrylique du second mélange.

7.  Procédé selon la revendication 6, dans lequel (S1) inclut en outre :
    l'alimentation en une partie du second mélange, qui contient un monomère d'éthylène et a été séparé du produit de copolymère d'éthylène-acide acrylique dans le séparateur (40), d'une unité de filtre (50) destinée à filtrer des impuretés et à fournir le monomère d'éthylène filtré à une extrémité avant du compresseur primaire (20) ou de l'hyper-compresseur (25).

8.  Procédé selon la revendication 6 ou 7,

    dans lequel le premier mélange est fourni à l'unité de nettoyage (90) par le biais d'une première conduite d'alimentation (81), qui relie l'hyper-compresseur (25) et l'unité de nettoyage (90), et
    le second mélange est transféré à l'unité de nettoyage (90) par le biais d'une seconde conduite d'alimentation (82), qui relie le réacteur de polymérisation (30) et l'unité de nettoyage (90).

9.  Procédé selon une quelconque revendication précédente, comprenant en outre :
    après l'étape (S3), une étape (S4) de déchargement d'une solution de nettoyage comprenant l'acide polyacrylique dissous dans le solvant de nettoyage.

10. Procédé selon une quelconque revendication précédente, dans lequel dans l'étape (S2), un rapport massique du comonomère d'acide acrylique : le solvant de nettoyage fourni à l'unité de nettoyage (90) est de 1:0,1 à 1:1, de préférence de 1:0,3 à 1:1, de préférence encore de 1:0,5 à 1:1.

11. Procédé selon une quelconque revendication précédente, dans lequel les étapes (S1) à (S3) ou, le cas échéant, les étapes (S1) à (S4) sont réalisées en un processus continu.

12. Procédé selon l'une quelconque des revendications 8 à 11, dans lequel la première conduite d'alimentation (81) et/ou la seconde conduite d'alimentation (82) incluent un échangeur de chaleur (85).

13. Procédé selon la revendication 12, dans lequel le solvant de nettoyage est alimenté dans la première conduite d'alimentation (81) et/ou la seconde conduite d'alimentation (85) en amont de l'échangeur de chaleur (85) et passe à travers l'échangeur de chaleur (85) inclus dans la première conduite d'alimentation (81) et/ou la seconde conduite d'alimentation (85) avant d'être fourni à l'unité de nettoyage (90).

14. Procédé selon l'une quelconque des revendications 8 à 11, dans lequel le solvant de nettoyage est fourni à l'unité de nettoyage (90) directement et sans être alimenté dans la première conduite d'alimentation (81) et/ou sans être alimenté dans la seconde conduite d'alimentation (85) et/ou sans passer à travers l'échangeur de chaleur (85) inclus dans la première conduite d'alimentation (81) et/ou la seconde conduite d'alimentation (85).

15. Procédé selon une quelconque revendication précédente, dans lequel une température dans l'unité de nettoyage est de 0°C à 50°C.

FIG. 1

FIG. 2

FIG. 3

FIG. 4

FIG. 5

FIG. 6

FIG. 7

FIG. 8

**EP 4 509 530 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022098340 A